(19) **Europäisches Patentamt**
**European Patent Office**
**Office européen des brevets**

(11) **EP 3 552 793 A1**

(12) **EUROPEAN PATENT APPLICATION**
published in accordance with Art. 153(4) EPC

(43) Date of publication:
**16.10.2019 Bulletin 2019/42**

(21) Application number: **17880694.9**

(22) Date of filing: **11.12.2017**

(51) Int Cl.:
**B29C 45/14** *(2006.01)* **B23K 26/354** *(2014.01)*

(86) International application number:
**PCT/JP2017/044388**

(87) International publication number:
**WO 2018/110505 (21.06.2018 Gazette 2018/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **12.12.2016 JP 2016240306**

(71) Applicant: **Daicel Polymer Ltd.**
**Tokyo 108-8231 (JP)**

(72) Inventors:
• **ITAKURA, Masahiko**
 **Tokyo 108-8231 (JP)**
• **KATAYAMA, Masahiro**
 **Himeji-shi**
 **Hyogo 671-1123 (JP)**
• **UNO, Takayuki**
 **Himeji-shi**
 **Hyogo 671-1123 (JP)**

(74) Representative: **Grünecker Patent- und Rechtsanwälte**
**PartG mbB**
**Leopoldstraße 4**
**80802 München (DE)**

(54) **METHOD FOR PRODUCING COMPOSITE MOULDED BODY, AND COMPOSITE MOULDED BODY**

(57) There is provided a method for manufacturing a composite molded body having a high joining strength between a metallic molded body and a resin molded body. A method for manufacturing a composite molded body in which a metallic molded body and a resin molded body are joined, includes a step of irradiating laser light onto a joining surface of the metallic molded body with the resin molded body in an energy density of 1 MW/cm2 or more and at an irradiation rate of 2000 mm/sec or more to roughen the surface, and a step of placing, in a mold, a portion of the metallic molded body containing the joining surface roughened in the preceding step and injection-molding a resin to obtain a composite molded body. The roughened joining surface of the metallic molded body has a porous structure containing a hole having a maximum depth from a surface exceeding 500 $\mu$m, and a joining strength between the metallic molded body and the resin molded body is 60 MPa or more.

EP 3 552 793 A1

## Description

Field of the Invention

The present invention relates to a method for manufacturing a composite molded body composed of a metallic molded body and a resin molded body, and a composite molded body obtained by this manufacturing method.

Background of the Invention

There is known a technique in which at the time of manufacturing a composite molded body composed of a metallic molded body and a resin molded body, a surface of the metallic molded body is roughened before the metallic molded body is integrated with the resin molded body.

JP-B2 5774246 describes a roughening method of a metallic molded body surface in which a surface of a metallic molded body is continuously irradiated with laser light at an irradiation rate of 2000 mm/sec or more using a continuous wave laser to roughen the surface of the metallic molded body (Claim 1).

In a composite molded body obtained by joining the metallic molded body with the resin molded body after executing the surface roughening method according to the invention described in JP-B2 5774246, the metallic molded body and the resin molded body are joined with a high joining strength (JP-B2 5701414).

Summary of the Invention

The present invention has an object of providing a method for manufacturing a composite molded body by which a composite molded body having a high joining strength between a metallic molded body and a resin molded body can be obtained.

The present invention provides a method for manufacturing a composite molded body in which a metallic molded body and a resin molded body are joined, including:

a step of irradiating laser light onto a joining surface of the metallic molded body with the resin molded body in an energy density of 1 MW/cm2 or more and at an irradiation rate of 2000 mm/sec or more to roughen the surface; and

a step of placing, in a mold, a portion of the metallic molded body containing the joining surface roughened in the preceding step and injection-molding a resin to obtain a composite molded body, wherein

the roughened joining surface of the metallic molded body has a porous structure containing a hole having a maximum depth from a surface exceeding 500 $\mu$m, and

a joining strength between the metallic molded body and the resin molded body is 60 MPa or more.

Advantageous Effect of the Invention

According to the method of the present invention for manufacturing a composite molded body, a composite molded body having a high joining strength between a metallic molded body and a resin molded body can be obtained.

Brief Description of Drawings

Figure 1 is a diagram illustrating an irradiation state of laser light in an embodiment at the time of executing the roughening of a metallic molded body surface in the present invention.

Figure 2 is a diagram illustrating an irradiation pattern of the laser light in the embodiment illustrated in Figure 1 in which Figure 2(a) illustrates an irradiation pattern in the same direction and Figure 2(b) illustrates a bidirectional irradiation pattern.

Figure 3(a) and Figure 3(b) are diagrams illustrating a laser light irradiation step in an embodiment different from the embodiment illustrated in Figure 1.

Figure 4 is a perspective view illustrating a metallic molded body used in Examples and Comparative Examples.

Figure 5 is an explanatory diagram of a test method using a composite molded body obtained in Examples and Comparative Examples.

Embodiments of the Invention

The method of the present invention for manufacturing a composite molded body includes a step of irradiating laser light onto a joining surface of a metallic molded body with a resin molded body in an energy density of 1 MW/cm$^2$ or more and at an irradiation rate of 2000 mm/sec or more to roughen the surface.

A shape and a size of the metallic molded body to be used in the present invention are not particularly limited, but can be selected depending upon an application of the composite molded body.

A metal of the metallic molded body to be used in the present invention is not particularly limited, but can be selected as needed from known metals depending upon an application thereof. The metal can be selected from, example, iron, various kinds of stainless steel, aluminum, zinc, titanium, copper, brass, chrome plating steel, magnesium and an alloy containing them, and cermet selected from tungsten carbide, chrome carbide and the like, and the present invention can also be applied to the metals subjected to surface treatment such as alumite treatment and plate processing.

As a laser light irradiation method in the step of irradiating laser light to roughen the surface, any one or both of the following methods may be used:

(1) a method in which laser light is continuously irradiated to be in a straight line, a curved line or a combination of the straight line and the curved line on a joining surface of a metallic molded body to be roughened (first laser light irradiation method), and
(2) a method in which laser light is irradiated to be in a straight line, a curved line, or a combination of a straight line and a curved line on the joining surface of the metallic molded body to be roughened and to generate laser light-irradiated portions and non-laser light-irradiated portions alternately in each of the straight lines and curved lines (second laser light irradiation method).

<First Laser Light Irradiation Method>

The first laser light irradiation method is known, and can be executed in the same way as the continuous irradiation method of laser light described in JP-B2 5774246, JP-B2 5701414, JP-B2 5860190, JP-B2 5890054, JP-B2 5959689, JP-A 2016-43413, JP-A 2016-36884 and JP-A 2016-44337.

However, the energy density of the laser light is required to be 1 MW/cm$^2$ or more. The energy density at the time of laser light irradiation is determined from output (W) of the laser light and a spot area (cm$^2$) ($\pi \cdot$ [spot diameter / 2]$^2$) of the laser light. The energy density at the time of laser light irradiation is preferably 2 to 1000 MW/cm$^2$, more preferably 10 to 800 MW/cm$^2$, and further preferably 10 to 700 MW/cm$^2$.

The irradiation rate of the laser light is 2000 mm/sec or more, preferably 2,000 to 20,000 mm/sec, more preferably 2000 to 18,000 mm/sec, and further preferably 3,000 to 15,000 mm/sec.

The output of the laser light is preferably 4 to 4000 W, more preferably 50 to 2500 W, and further preferably 150 to 2000 W. When other laser light irradiation conditions are the same, a depth of the hole (groove) is deeper as the output is larger, and the depth of the hole (groove) is shallower as the output is smaller.

A wavelength is preferably 500 to 11,000 nm. A beam diameter (spot diameter) is preferably 5 to 80 $\mu$m.

A defocusing distance is preferably -5 to +5 mm, more preferably -1 to +1 mm, and further preferably -0.5 to +0.1 mm. The defocusing distance may have a constant setting value to perform the laser irradiation, or the defocusing distance may be changed while performing the laser irradiation. For example, at the time of laser irradiation, the defocusing distance may be gradually made smaller, or may be periodically made larger and smaller. When the defocusing distance is adjusted to a minus (-) (that is, when the inner side of the metallic molded body surface is focused), the depth of the hole becomes deeper. When deepening the depth of the hole, the defocusing distance is preferably -0.5 to -0.05 mm, more preferably -0.3 to -0.05 mm, and further preferably -0.15 to -0.05 mm.

By adjusting the repetition number at the time of laser light irradiation together with the irradiation of laser light by the above-mentioned laser light irradiation conditions, the roughened joining surface of the metallic molded body can be adjusted to have a porous structure in which the hole (groove) exceeding the maximum depth of 500 $\mu$m from the surface is formed. That is, in an embodiment of the present invention, one or more of the energy density of the laser light, the laser irradiation rate, the laser wavelength, the number of times of irradiation and the defocusing distance are adjusted such that the roughened joining surface of the metallic molded body has a porous structure in which the hole (groove) exceeding the maximum depth of 500 $\mu$m from the surface is formed.

The repetition number (a total number of irradiations of the laser light for forming one hole or groove) is preferably 10 to 30, more preferably 15 to 25. When the laser irradiation conditions are the same, the depth of the hole (groove) is deeper as the repetition number is larger, and the depth of the hole (groove) is shallower as the repetition number is smaller.

According to an embodiment of the present invention, the laser light irradiation step includes one or both of making the number of times of repetition of the laser light irradiation 15 times or more and adjusting the defocusing distance of the laser light to the minus. In this case, the laser light irradiation step may be either one of the first laser light irradiation method and the second laser light irradiation method.

The maximum depth of the hole (groove) from the surface is preferably 550 $\mu$m or more, more preferably 600

μm or more. That is, the joining surface has the porous structure containing the hole (groove) having a maximum depth from the surface of preferably 550 μm or more, more preferably 600 μm or more.

An average depth of the hole (groove) from the surface is preferably 400 to 700 μm, more preferably 400 to 600 μm. In addition, a depth range of the hole (groove) is preferably 50 μm to less than 1000 μm, more preferably 100 to 900 μm, further preferably 100 to 800 μm.

<Second Laser Light Irradiation Method>

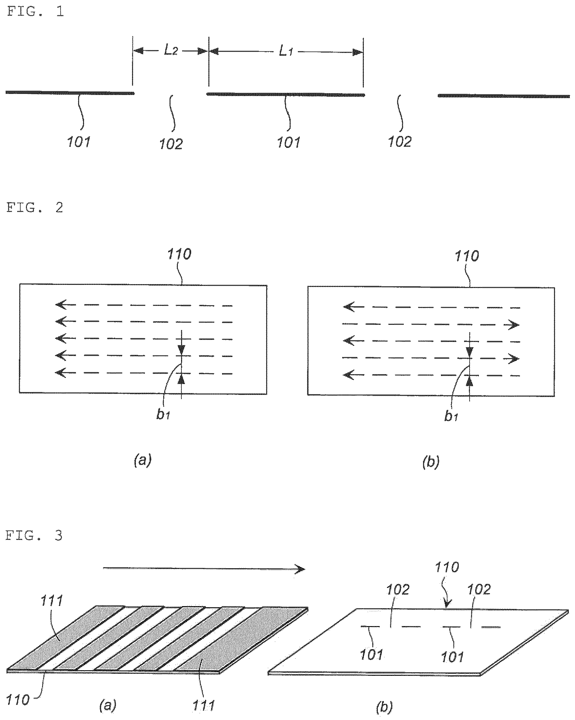

In the second laser light irradiation method, performing irradiation so as to generate laser light-irradiated portions and non-laser light-irradiated portions alternately includes an embodiment in which the irradiation is performed as illustrated in Figure 1.

Figure 1 illustrates a state in which: a laser light-irradiated portion 101; and a non-laser light-irradiated portion 102 located between adjacent laser light-irradiated portions 101 are generated alternately so as to form dotted straight (or curved) lines as a whole. At this time, the laser light can be repeatedly irradiated in the same portion so as to make one dotted line in appearance as illustrated in Figure 1. The number of times of repetition (the number of times of irradiation) may be 1 to 20 times, for example.

When the irradiation is performed by a plurality of times, the laser light-irradiated portions may be the same as above; or, by differentiating the laser light-irradiated portions (shifting the laser light-irradiated portions), the whole which is in a straight or curved pattern may be roughened.

When irradiation is performed a plurality of times with laser light-irradiated portions being the same, it is performed in a dotted line pattern. However, when laser light-irradiated portions are shifted, that is, irradiation is repeated by shifting such that the portions not irradiated with laser light at first are at least partially overlapped with laser light-irradiated portions, irradiation in a solid line is achieved in the end even when irradiation is made in a dotted line pattern each time.

When a metal molded body is irradiated with laser light continuously, the temperature of an irradiated surface increases, and thus a deformation such as warpage may occur in a molded body having a small thickness. Therefore, a countermeasure such as cooling may be required. However, as shown in Figure 1, when laser irradiation is performed in a dotted line pattern, the laser light-irradiated portions 101 and the non-laser light-irradiated portions 102 are generated alternately, and the non-laser light-irradiated portions 102 are cooled. Thus, when the irradiation of laser light is continued, probability of occurrence of the deformation such as warpage is preferably reduced even when the thickness of a molded body is small. In this case, the same effect is achieved even when the laser light-irradiated portions are varied (laser light-irradiated portions are shifted) as described above since at each time of irradiation the laser light, the irradiation is performed in the dotted line pattern.

The laser light irradiation method that may be used includes a method in which a plurality of irradiated portions in a dotted line pattern such as the above are irradiated parallel in one direction on the surface of the metal molded body 110 (joining surface) as illustrated in Figure 2(a), or a method for irradiating bidirectionally as indicated by dotted lines illustrated in Figure 2(b). Alternatively, a method for irradiating laser light so that the laser light-irradiated portions in a dotted line pattern intersect with one another may also be applicable. Such irradiation patterns may also be used for the first laser light irradiation method.

A distance b1 between each of the dotted lines after irradiation may be adjusted according to an area of the joining surface of the metal molded body, and for example, may be made in the range from 0.01 to 5 mm.

The ratio L1/L2 of the length (L1) of the laser light-irradiated portion 101 and the length (L2) of the non-laser light-irradiated portion 102 illustrated in Figure 1 may be adjusted to range from 1/9 to 9/1. The length (L1) of the laser light-irradiated portion 101 is preferably 0.05 mm or more, more preferably 0.1 to 10 mm, and further preferably 0.3 to 7 mm to roughen into a complex porous structure.

In the second laser light irradiation method, laser may be irradiated by using a fiber laser apparatus in which a modulation device of a direct modulation system to directly convert a laser drive current is connected to a laser power source, and adjusting a duty ratio.

There are two types of laser excitation; pulsed excitation and continuous excitation, and a pulse wave laser generated by the pulsed excitation is typically referred to as a normal pulse. A pulse wave laser can be produced even by the continuous excitation. The pulse wave laser may be generated by a Q-switch pulse oscillation method, which is a method for making a pulse width (pulse-ON time) shorter than the normal pulse and oscillating laser with higher peak power correspondingly, an external modulation system which generates a pulsed wave laser by temporally cutting out light by an AOM or LN light intensity modulator, and a direct modulation system which generates a pulsed wave laser by directly modulating the laser drive current.

In the above preferred embodiment, a pulse wave laser is generated by continuously exciting laser by use of the fiber laser apparatus in which a modulation device of a direct modulation system to directly convert a laser drive current is connected to a laser power source, and the laser is different from the continuous wave laser used in the first laser irradiation method.

However, the energy density, the irradiation rate of the laser light, the output of the laser light, the wavelength, the beam diameter (spot diameter) and the defocusing distance are implemented in the same way as the first laser irradiation method.

The duty ratio is a ratio determined by the following equation,

$$\text{Duty ratio (\%) = ON time / (ON time + OFF time)} \times 100$$

from the ON and OFF times of the output of the laser light.

The duty ratio, corresponding to L1/L2 illustrated in Figure 1, may be selected from a range of 10 to 90%. By irradiating laser light with the duty ratio adjusted, irradiation in a dotted line pattern as illustrated in Figure 1 is achieved. When the duty ratio is large, efficiency of the surface roughening step is improved, but cooling effect is lowered. In contrast, when the duty ratio is small, the cooling effect is improved, but the surface roughening efficiency is lowered. The duty ratio is preferably adjusted depending on the purpose.

In the second laser light irradiation method, a method of continuously irradiating laser in a state where masking members not allowing passage of laser light are disposed at intervals on the joining surface of a metal molded body to be roughened may be applied. The masking members may be or may not be in contact with the metal molded body. When irradiating laser light a plurality of times, the entire joining surface of the metal molded body can be roughened by changing the positions of the masking members.

In one example of this embodiment, laser light is irradiated continuously in a state where a plurality of masking members 111 are disposed at intervals on the metal molded body 110 as illustrated in Figure 3(a). As the masking members, a metal having a low thermal conductivity and the like may be used.

When the masking members 111 are removed after the irradiation of laser light, formed is a dotted line, as illustrated in Figure 3(b), in which laser light-irradiated portions 101 and non-laser light-irradiated portions 102 are alternately generated in the same manner as in Figure 1.

In the case of the embodiment illustrated in Figures 3(a) and 3(b), since the portions provided with the masking members 111 are cooled, probability of occurrence of the deformation such as warpage is preferably reduced even when the thickness of a molded body is small when irradiation of the laser light is continued.

The ratio L1/L2 of the length (L1) of the laser light-irradiated portion 101 and the length (L2) of the non-laser light-irradiated portion 102 may be adjusted to be ranged from 1/9 to 9/1 as in the case of Figure 1. The length (L1) of the laser light-irradiated portion 101 is preferably 0.05 mm or more, preferably 0.1 to 10 mm, and more preferably 0.3 to 7 mm to roughen into a complex porous structure.

A known laser can be used as the laser to be used in the first laser light irradiation method and the second laser light irradiation method, and for example, a $YVO_4$ laser, a fiber laser (a single mode fiber laser, a multimode fiber laser), an excimer laser, a carbon dioxide laser, an ultraviolet laser, a YAG laser, a semiconductor laser, a glass laser, a ruby laser, a He-Ne laser, a nitrogen-laser, a chelate laser, or a dye laser may be used.

When performing the first laser light irradiation method or the second laser light irradiation method in the step of irradiating laser light onto a joining surface of a metallic molded body to roughen the surface, irradiating the laser light so as to satisfy the energy density and the irradiation rate as described above causes the surface (joining surface) of the metal molded body to be partially evaporated while being melted, and consequently, holes having a complex structure are formed. The porous structure formed at this time is the same complicated structure as each of the structures illustrated in Figure 7 and Figure 8 of JP-B2 5774246 and Figure 7 and Figure 8 of JP-B2 5701414 or a porous structure similar thereto.

Meanwhile, if the energy density and the irradiation rate described above are not satisfied, holes (holes formed by ordinary pulse laser irradiation) are formed on the surface (joining surface) of the metal molded material due to sublimation of material, or the surface is melted (laser welded); thus, holes having a complex structure are not formed.

In the next step, a portion of the metallic molded body containing the joining surface (for example, a surface irradiated with the laser light as illustrated in Figure 2) roughened in the preceding step is placed in a mold and a resin to be the resin molded body is injection-molded to obtain a composite molded body.

The resin in the melting state enters the inside of the porous structure of the roughened joining surface at the time of injection-molding and after that, is solidified, thereby integrating, in the composite molded body, the joining surface of the metallic molded body (laser light-irradiated portion) and the resin molded body with a strong joining force.

Examples of a resin to be used in the resin molded body also include a thermoplastic elastomer in addition to a thermoplastic resin and a thermosetting resin.

The thermoplastic resin can be selected as needed from known thermoplastic resins depending upon an application thereof. An example thereof may include a polyamide resin (aliphatic polyamide, aromatic polyamide of PA6, PA66 and the like), a polystyrene, a copolymer including a styrene unit of an ABS resin, an AS resin or the like, a polyethylene, a copolymer including an ethylene unit, a polypropylene, a copolymer including a propylene, other polyolefins, a polyvinyl chloride, a polyvinylidene chloride, a polycarbonate resin, an acrylic resin, a methacrylic resin, a polyester resin, a polyacetal resin, and a polyphenylene sulfide resin.

The thermosetting resin can be selected as needed from known thermosetting resins depending upon an application thereof. An example thereof may include a urea resin, a melamine resin, a phenol resin, a resorcinol resin, an epoxy resin, a polyurethane, and a vinyl urethane.

The thermoplastic elastomer can be selected as needed from known thermoplastic elastomers depending upon an application thereof. An example thereof may include a styrene elastomer, a vinyl chloride elastomer, an olefin elastomer, an urethane elastomer, a polyester elastomer, a nitrile elastomer, and a polyamide elastomer.

A known fibrous filler can be blended in the thermoplastic resin, the thermosetting resin and the thermoplastic elastomer. Examples of the known fibrous filler may include a carbon fiber, an inorganic fiber, a metallic fiber, an organic fiber and the like. The resin molded body can contain a fibrous filler of 30 mass% or more.

The carbon fiber is a known fiber, and a PAN, pitch carbon, rayon or lignin carbon fiber or the like can be used.

Examples of the inorganic fiber may include a glass fiber, a basalt fiber, a silica fiber, a silica alumina fiber, a zirconia fiber, a boron nitride fiber, a silicon nitride fiber and the like.

Examples of the metallic fiber may include a fiber made of stainless steel, aluminum, copper or the like.

Examples of the organic fiber may include a polyamide fiber (a wholly aromatic polyamide fiber, a semi-aromatic polyamide fiber in which one of diamine and dicarboxylic acid is an aromatic compound, and an aliphatic polyamide fiber), a polyvinyl alcohol fiber, an acrylic fiber, a polyolefin fiber, a polyoxymethylene fiber, a polytetrafluoroethylene fiber, a polyester fiber (including a wholly aromatic polyester fiber), a polyphenylene sulfide fiber, a polyimide fiber, a synthetic fiber such as a liquid crystal polyester fiber, a natural fiber (a cellulose fiber or the like), a regenerated cellulose (rayon) fiber and the like.

The fiber fillers having a fiber diameter of a range of 3 to 60 $\mu$m may be used, but among them, it is preferable to use a fiber filler having a fiber diameter smaller than the diameter of an opening of a releasing hole or the like, which is for example formed by roughening the joining surface of the metal molded body. The fiber diameter is more preferably 5 to 30 $\mu$m, and further preferably 7 to 20 $\mu$m.

In the manufacturing method of the present invention, the roughened joining surface of the metallic molded body has a porous structure containing a hole having a maximum depth from the surface exceeding 500 $\mu$m, and in a state where the resin enters the inside of the porous structure, the metallic molded body and the resin molded body are integrated.

The composite molded body obtained in the manufacturing method of the present invention has 60 MPa or more of a joining strength between the metallic molded body and the resin molded body. The composite molded body of the present invention is a composite molded body in which the metallic molded body and the resin molded body are joined, and the joining surface of the metallic molded body with the resin molded body is roughened to have a porous structure containing a hole having a maximum depth from the surface exceeding 500 $\mu$m, and the joining strength between the metallic molded body and the resin molded body is 60 MPa or more. The matters described with respect to the manufacturing method of the present invention can be applied to each of the constituent elements of the composite molded body and the roughening in the case of using the laser light irradiation.

The composite molded body obtained by the manufacturing method of the present invention is considered to have a larger joining strength since the maximum depth of the hole (groove) formed in the metallic molded body exceeds 500 $\mu$m, and the opening of the hole (groove) becomes larger as the depth of the hole (groove) is deeper, leading to easy entering of the resin (including the fiber) in a melted state therein. Examples

Examples 1 to 4 and Comparative Examples 1 and 2

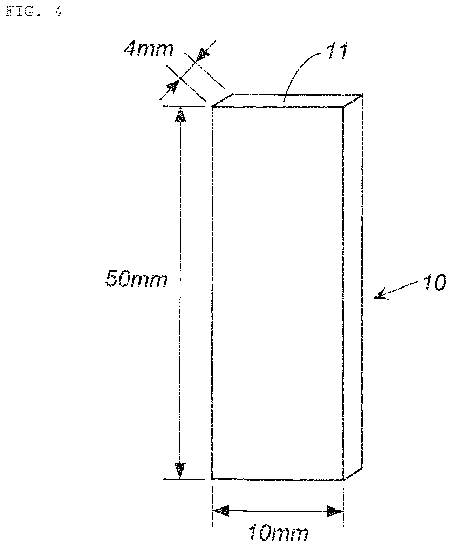

In Examples and Comparative Examples, an entire surface (broadness range of 40 mm$^2$) of the joining surface 11 in the metallic molded body (aluminum: A5052) 10 illustrated in Figure 4 was continuously irradiated with laser light on a condition illustrated in Table 1 by the first laser light irradiation method to roughen the laser light irradiated surface.

It should be noted that, while the irradiation pattern is bidirectional as in Figure 2(b), it is the same irradiation pattern as Figure 2(b) and is illustrated in a solid line because of the first laser light irradiation method (continuous irradiation of the laser light).

The laser apparatus used includes the following:

Oscillator: IPG-Yb fiber; YLR-300-SMAC
Collector optics: fc = 80 mm/f$\theta$ = 100 mm

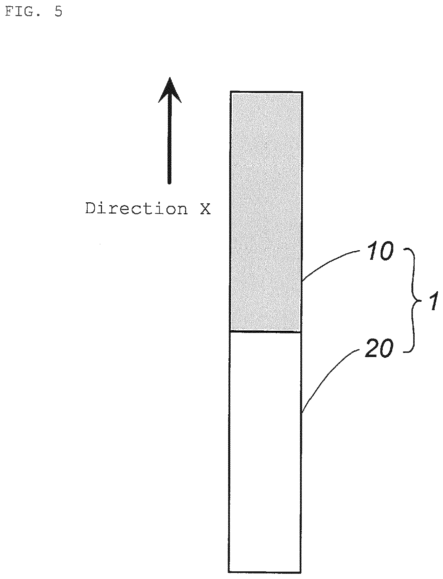

Next, the injection molding was performed in the following method using the treated metallic molded body to obtain a composite molded body 1 illustrated in Figure 5, composed of the metallic molded body 10 and the resin molded body 20 in Examples and Comparative Examples. The resin molded body 20 has the same shape and the same dimension as the metallic molded body 10.

<Injection Molding>

30% GF reinforced PA6 resin (Plastron PA6-GF30-01, length 9 mm: made by Daicel Polymer. Ltd)
Resin temperature: 280°C
Mold temperature: 100°C
Injection molding machine: ROBOSHOT S20000i100B made by Fanuc

(Groove Depth)

The maximum depth of the groove (hole) was found by selecting portions having an area of 1 mm $\times$ 1 mm = 1 mm$^2$ from the surface (broadness range of 40 mm$^2$) subjected to the laser light irradiation at ten locations and measuring the selected portions by a digital microscope M205C (Leica Micro Systems, Ltd). Specifically, nine straight lines were drawn to be in parallel by an interval of 100 $\mu$m in the squares each having 1 mm $\times$ 1 mm respectively, and the depth was measured from observing the cross section of the straight line portion. The maximum depth in the measurement with respect to the squares at the ten locations was determined as the maximum groove depth.

An average groove (hole) depth was evaluated as an average value of the individual maximum depths of the squares at the ten locations measured in the above-mentioned method. In a case where the maximum groove (hole) exceeded a measurable range of the digital microscope, the maximum groove (hole) within the measurable range was determined as the maximum value.

[Tension Test]

The tension test was conducted using the composite molded body illustrated in Figure 7 of Examples and Comparative Examples to evaluate a shear joining strength. The result is illustrated in Table 1.
The tension test was conducted by measuring the maximum load until the joining surface between the metallic molded body 10 and the resin molded body 20 was destructed in the case of pulling a portion of the metallic molded body 10 in direction X illustrated in Figure 5 while an end on the resin molded body 20-side was fixed.

<Tension Test Condition>

Tester: Autograph AG-X plus (50kN) made by Shimadzu Corporation
Tension speed: 10 mm/min
Chuck-to chuck distance: 50 mm

[Table 1]

| | Example | | | | Comparative Example | |
|---|---|---|---|---|---|---|
| | 1 | 2 | 3 | 4 | 1 | 2 |
| Kind of Metallic Plate | A5052 | | | | | |
| Thickness (mm) of Metallic Plate | 50.0 | | | | | |
| Laser Oscillator | Single Mode Fiber Laser | | | | | |
| Output (W) | 300 | | | | 300 | |
| Wavelength (nm) | 1070 | | | | 1070 | |
| fc (mm) | 80 | 80 | 80 | 80 | 80 | 80 |
| f$\theta$ (mm) | 100 | 100 | 100 | 100 | 100 | 100 |
| Spot Diameter ($\mu$m) | 16 | 16 | 25 | 27 | 16 | 16 |
| Defocusing distance ($\mu$m) | 0 | 0 | -80 | -100 | 0 | 0 |
| Energy Density (MW/cm$^2$) | 145 | 145 | 61 | 52 | 145 | 145 |
| Laser Irradiation Rate (mm/sec) | 10,000 | | | | 10,000 | |

(continued)

| | Example | | | | Comparative Example | |
|---|---|---|---|---|---|---|
| | 1 | 2 | 3 | 4 | 1 | 2 |
| Irradiation Pattern | Bidirectional (Figure 2(b)) | | | | Bidirectional (Figure 2 (b)) | |
| Number of Lines | 80 | | | | 80 | |
| Distance between Lines (b1) (mm) | 0.05 | | | | 0.05 | |
| Number of Times of Repetition | 25 | 20 | 20 | 20 | 5 | 10 |
| Treatment Area (mm$^2$) | 40 | | | | 40 | |
| Average Groove Depth ($\mu$m) | 510 | 470 | 510 | 550 | 125 | 220 |
| Maximum Groove Depth ($\mu$m) | 730 | 690 | 720 | 780 | 200 | 370 |
| Joining Strength (MPa) | 66 | 65 | 66 | 67 | 33 | 50 |

From the comparison among Example 1 to Example 4, it was confirmed that the maximum depth became deeper by making the defocusing distance to be in minus. From the comparison between Examples 1, 2 and Comparative Examples 1, 2, it was confirmed that the average groove depth and the maximum groove depth became deeper by increasing the repetition number of laser irradiation. From the comparison between Examples and Comparative Examples, it was confirmed that there was made a clear difference in joining strength due to a difference in maximum groove depth.

Industrial Applicability

The method of the present invention for manufacturing a composite molded body and the obtained composite molded body can be used for lightweight by replacing part of the metallic product with the resin molded body.

**Claims**

1. A method for manufacturing a composite molded body in which a metallic molded body and a resin molded body are joined, comprising:

a step of irradiating laser light onto a joining surface of the metallic molded body with the resin molded body in an energy density of 1 MW/cm$^2$ or more and at an irradiation rate of 2000 mm/sec or more to roughen the surface; and

a step of placing, in a mold, a portion of the metallic molded body containing the joining surface roughened in the preceding step and injection-molding a resin to obtain a composite molded body, wherein

the roughened joining surface of the metallic molded body has a porous structure containing a hole having a maximum depth from a surface exceeding 500 $\mu$m, and

a joining strength between the metallic molded body and the resin molded body is 60 MPa or more.

2. The method for manufacturing a composite molded body according to Claim 1, wherein
the roughened joining surface of the metallic molded body has a porous structure containing a hole having a maximum depth from the surface of 600 $\mu$m or more.

3. The method for manufacturing a composite molded body according to Claim 1 or 2, wherein
the step of irradiating the laser light to roughen the surface is a step of performing continuous irradiation of the laser light such that the laser light is irradiated to be in a straight line, a curved line, or a combination of a straight line and a curved line on the joining surface of the metallic molded body to be roughened.

4. The method for manufacturing a composite molded body according to Claim 1 or 2, wherein
the step of irradiating the laser light to roughen the surface is a step of performing irradiation such that the laser light is irradiated to be in a straight line, a curved line, or a combination of a straight line and a curved line on the surface of the metallic molded body to be roughened and to generate laser light-irradiated portions and non-laser light-irradiated portions alternately in each of the straight lines and curved lines.

5. The method for manufacturing a composite molded body according to Claim 4, wherein
   the laser light irradiation step is a step of performing laser irradiation by using a fiber laser apparatus in which a modulation device of a direct modulation system to directly convert a laser drive current is connected to a laser power source, and adjusting a duty ratio.

6. The method for manufacturing a composite molded body according to any one of Claims 1 to 5, wherein
   the laser light irradiation step includes one or both of making a repetition number of the laser light irradiation 15 times or more and adjusting a defocusing distance of the laser light to a minus.

7. The method for manufacturing a composite molded body according to any one of Claims 1 to 6, wherein
   the resin molded body contains a fibrous filler of 30 mass% or more.

8. A composite molded body obtained by the method for manufacturing a composite molded body according to any one of Claims 1 to 7.

9. A composite molded body in which a metallic molded body and a resin molded body are joined, wherein
   a joining surface of the metallic molded body with the resin molded body is roughened to have a porous structure containing a hole having a maximum depth from a surface exceeding 500 $\mu$m, and
   a joining strength between the metallic molded body and the resin molded body is 60 MPa or more.

FIG. 1

FIG. 2

(a)                                    (b)

FIG. 3

(a)                                    (b)

FIG. 4

FIG. 5

Direction X

10
20
1

**EP 3 552 793 A1**

## INTERNATIONAL SEARCH REPORT

International application No.

PCT/JP2017/044388

**A. CLASSIFICATION OF SUBJECT MATTER**
Int.Cl. B29C45/14(2006.01)i, B23K26/354(2014.01)i

According to International Patent Classification (IPC) or to both national classification and IPC

**B. FIELDS SEARCHED**

Minimum documentation searched (classification system followed by classification symbols)
Int.Cl. B29C45/00-45/84, B23K26/00-26/70, B29C43/00-43/58, B29C63/00-63/48,
 B29C65/00-65/82

| Documentation searched other than minimum documentation to the extent that such documents are included in the fields searched | |
|---|---|
| Published examined utility model applications of Japan | 1922-1996 |
| Published unexamined utility model applications of Japan | 1971-2017 |
| Registered utility model specifications of Japan | 1996-2017 |
| Published registered utility model applications of Japan | 1994-2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2016-124024 A (DAICEL POLYMER LTD.) 11 July 2016 claims, paragraph [0050], examples (Family: none) | 1-9 |
| X | JP 2016-121745 A (DAICEL POLYMER LTD.) 07 July 2016 claims, paragraph [0038], examples (Family: none) | 1-9 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 December 2017 (26.12.2017) | 16 January 2018 (16.01.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

# EP 3 552 793 A1

## INTERNATIONAL SEARCH REPORT

| | International application No. |
|---|---|
| | PCT/JP2017/044388 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | JP 2009-51131 A (TOYOTA GOSEI CO., LTD.) 12 March 2009 claims, paragraphs [0018], [0030]-[0033] (Family: none) | 8-9<br>1-7 |
| X<br>A | WO 2015/188798 A1 (INPRO INNOVATIONSGESELLSCHAFT FUR FORTGESCHRITTENE PRODUKTIONSSYSTEME IN DER FAHRZEUGINDUSTRIE MBH) 17 December 2015 claims, p. 8, line 29 to p. 9, line 2, p. 10, lines 9-23, fig. 1-2 & US 2017/0136668 A1 claims, paragraphs [0033], [0048], fig. 1-2 & JP 2017-524554 A & EP 3154764 A1 & DE 102014008815 A & CN 106715073 A | 8-9<br>1-7 |
| X<br>A | JP 2015-100959 A (DIC CORP.) 04 June 2015 claims, paragraph [0018], example 2 (Family: none) | 8-9<br>1-7 |

Form PCT/ISA/210 (continuation of second sheet) (January 2015)

14

## REFERENCES CITED IN THE DESCRIPTION

**Patent documents cited in the description**

- JP 5774246 B
- JP 5701414 B
- JP 5860190 B
- JP 5890054 B
- JP 5959689 B
- JP 2016043413 A
- JP 2016036884 A
- JP 2016044337 A